Europäisches Patentamt

European Patent Office

Office européen des brevets

(11) Veröffentlichungsnummer: **0 044 462**
**A1**

## (12) EUROPÄISCHE PATENTANMELDUNG

(21) Anmeldenummer: 81105275.2

(22) Anmeldetag: 08.07.81

(51) Int. Cl.³: **E 01 F 8/00**
**F 24 J 3/02, F 24 D 11/02**

(30) Priorität: 23.07.80 DE 3027801

(43) Veröffentlichungstag der Anmeldung:
27.01.82 Patentblatt 82/4

(84) Benannte Vertragsstaaten:
AT BE CH DE FR GB IT LI LU NL SE

(71) Anmelder: Buderus Aktiengesellschaft
Sophienstrasse 32-34
D-6330 Wetzlar(DE)

(72) Erfinder: Brachthäuser, Karl-Heinz
Fasanenring 19
D-4030 Ratingen 6(DE)

(74) Vertreter: Benner, Alwin, Dipl.-Ing.
Buderus Aktiengesellschaft ZA-Patentabteilung
Postfach 1220
D-6330 Wetzlar(DE)

(54) Einrichtungen zum Schutz gegen Verkehrsbelästigungen.

(57) Stark frequentierte Verkehrswege werden seitlich mit
Lärmschutzwänden versehen, welche gleichzeitig mit Strömungskanälen für Wärmeträgerflüssigkeit versehen sind.
Die Wärmeträgerflüssigkeit nimmt Wärme aus der natürlichen Umgebung auf und führt sie dem Wärme-tauscher
einer Wärmepumpe zu.

EP 0 044 462 A1

- 1 -

Patentansprüche

1. Einrichtungen zum Schutz gegen Verkehrsbelästigungen, insbesondere Lärmschutzwände an Verkehrswegen, gekennzeichnet durch integrierte Strömungskanäle für eine zirkulierende Wärmträgerflüssigkeit und durch eine zugeordnete, zu Wärmeverbrauchern führende Wärmepumpe.

2. Einrichtung nach Anspruch 1, dadurch gekennzeichnet, daß einzelne Wandelemente mit den integrierten Strömungskanälen den Aufbau von an sich bekannten Absorbern als Wärmeaustauschern für die zugeordnete Wärmepumpe besitzen und daß zwischen der Wärmepumpe und den Wärmeverbrauchern ein Großwärmespeicher angeordnet ist.

Der Erfindung lag die Aufgabe zugrunde, die Einrichtungen zum Schutz gegen Verkehrsbelästigungen, insbesondere die Lärmschutzwände in der Nähe von Siedlungen so zu gestalten, daß sie auch wirtschaftlich genutzt werden können.

Gemäß der Erfindung wird dieses erreicht durch in die Einrichtungen integrierte Strömungskanäle für eine zirkulierende Wärmeträgerflüssigkeit und durch eine zugeordnete, zu Wärmeverbrauchern führende Wärmepumpe.

Die Einrichtungen nach der Erfindung stellen Großabsorber als Wärmeaustauscher der zugeordneten Wärmepumpe dar. Die einzelnen Bauelemente können dabei so gestaltet werden, daß sie geschlossene Absorberelemente bilden, die durch einfache Kupplungsglieder zu verbinden sind. Es ist empfehlenswert, zwischen der Wärmepumpe und den Wärmeverbrauchern einen Großwärmespeicher anzuordnen, aus dem die gespeicherte Wärme bei Bedarf, ggfs. unter Zwischenschaltung weiterer Wärmepumpen, entnommen werden kann.

Gerade die Lärmschutzwände eignen sich für die erfindungsgemäße Nutzung hervorragend. Sie besitzen sehr große, bisher ungenutzte Außenflächen, die ein hohes Wärmeaufnahmevermögen haben. Die Wärme kann der Sonnenstrahlung, dem Wind und auch dem Regen entnommen werden. Der Regen dient gleichzeitig einer Reinigung der Oberfläche.

Nicht nur die großen Wärmeaustauschflächen machen die Lärmschutzwände für den vorgesehenen Zweck geeignet. Hinzu kommt noch ihre Lage, die immer in der Nähe von Siedlungen, d.h. von Wärmeverbrauchern, ist. Großflächige Einrichtungen fern von Wärmeverbrauchern könnten die gestellte Aufgabe nicht erfüllen.

- 3 -

Durch die spezielle Gestaltung, die die Verwendung als Absorber von Wärmepumpen ermöglicht, besitzen die Lärmschutzwände nicht nur den notgedrungenen Abwehreffekt. Sie erzielen vielmehr einen wirtschaftlichen Nutzen in Form einer kontinuierlichen Energiegewinnung. Der zu erzielende Nutzen ist wesentlich größer als die notwendigen Investitionen, weil die Elemente selbst auf jeden Fall gebaut werden müssen.

BUDERUS AKTIENGESELLSCHAFT
TP/F/B/EP 15-142          - 1 -


Einrichtungen zum Schutz gegen Verkehrsbelästigungen

Die Erfindung betrifft Einrichtungen zum Schutz gegen Verkehrsbelästigungen, insbesondere Lärmschutzwände an Verkehrswegen.

Die Einrichtungen der genannten Art sind notwendig, um spezielle Probleme zu mildern, die durch ein immer dichter werdendes und immer stärker frequentiertes Netz von Verkehrswegen entstehen. Das erhöhte Verkehrsaufkommen stellt nicht nur eine stärkere Behinderung der Verkehrsteilnehmer selbst dar, sondern es beeinträchtigt auch sehr stark die Wohnqualität ganzer Siedlungskomplexe. Die Einrichtungen wie die Lärmschutzwände sollen die auftretenden Belästigungen auf ein erträgliches Maß reduzieren.

Im Grunde stellen die Einrichtungen ein notwendiges Übel dar, das notgedrungen in Kauf genommen werden muß. Sie erfüllen eine bestimmte Abwehraufgabe. Ein positives Ergebnis in Form eines wirtschaftlichen Nutzens erbringen sie nicht.

- 2 -

# EUROPÄISCHER RECHERCHENBERICHT

**Europäisches Patentamt**

Nummer der Anmeldung

EP 81 10 5275.2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - U1 - 8 002 937 (KÜHNHENRICH) <br> * Seite 3, letzter Absatz * <br> --- | 1 |
| | DE - A1 - 2 449 277 (PRELORENZO) <br> * ganzes Dokument * <br> --- | 1,2 |
| A | US - A - 4 164 933 (ALOSI) <br> ----- | |

**KLASSIFIKATION DER ANMELDUNG (Int. Cl.³)**

E 01 F    8/00
F 24 J    3/02
F 24 D   11/02

**RECHERCHIERTE SACHGEBIETE (Int. Cl.³)**

E 01 F    8/00
F 24 J    3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 13-10-1981 | PAETZEL |